# EUROPEAN PATENT APPLICATION

(11) **EP 2 431 398 A1**
(43) Date of publication of application: **21.03.2012**
(21) Application number: 11179406.1
(22) Date of filing: 30.08.2011
(51) Int. Cl.: C08G 18/08, C08G 18/10, C08G 18/28, C08G 18/72, C08G 18/75, C08G 18/79, C08K 3/26, C08L 9/08, C09D 109/08, D21H 19/36

(54) **Comb polyurethanes for paper coating**

(30) Priority: 15.09.2010 IT VA20100068
(71) Applicant: Lamberti SPA, 21041 Albizzate (VA) (IT)
(72) Inventor: Federici, Franco, 21052 Busto Arsizio (VA) (IT); Bossi, Thierry, 21030 Azzio (VA) (IT); Costa, Gabriele, 20026 Novate Milanese (IT); Amici Kroutilova, Irena, 28040 Paruzzaro (NO) (IT); Fumagalli, Stefano, 21040 Carnago (VA) (IT); Mazzi, Michele, 22077 Olgiate Comasco (CO) (IT); Vago, Riccardo, 21051 Arcisate (VA) (IT); Fornara, Dario, 28100 Novara (IT); Floridi, Giovanni, 28100 Novara (IT); Li Bassi, Giuseppe, 21026 Gavirate (VA) (IT)
(74) Representative: Giaroni, Paola

(57) **Abstract**

Comb water soluble polyurethanes containing polyoxyalkylene side-chains and characterized by containing polyoxyalkylene side-chains having each molecular weight higher than 500 and by having poly(ethylene oxide) content higher than 60% by weight and poly(propylene oxide) content from 5 to 30% by weight are useful as water retention agents in paper coating compositions.

## Description

### FIELD OF THE I NVENTI ON

The present invention relates to comb water soluble (hydrophilic) polyurethanes containing polyoxyalkylene side-chains.

The comb polyurethanes are characterized by containing polyoxyalkylene side-chains having each molecular weight higher than 500 and by having poly(ethylene oxide) content higher than 60% by weight and poly(propylene oxide) content from 5 to 30% by weight.

The present invention additionally relates to the use of the above comb polyurethanes as water retention agents in paper coating compositions.

### BACKGROUND OF THE ART

Hydrophilic comb polyurethanes containing polyoxyalkylene side-chains are known and have been described in the patent literature.

EP 60,430 discloses a process for making a polyurethane having polyalkylene oxide side-chains characterised in that the polyalkylene oxide used as starting alcohol has at least two free hydroxy groups separated by not more than 3 carbon atoms, which hydroxy groups react with diisocyanates.

The resulting polyurethanes may be used to stabilise or destabilise foams, emulsions and dispersions. They may also be used with pigments and fillers. However, there is no mention in EP 60,430 of polyurethanes having poly(ethylene oxide) content higher than 60% by weight and poly(propylene oxide) content from 5 to 30% by weight or of the use of the polyurethanes in paper coating compositions.

WO 03/046038 describes a broad family of polyurethane dispersants comprising from 35 to 90% by weight of poly(C₂₋₄-alkylene oxide) based on the total weight of the polyurethane polymer, wherein not less than 60% by weight of the poly(C₂₋C₄-alkylene oxide) is poly(ethylene oxide) and at least 5% of the poly(C₂₋₄-alkylene oxide) is incorporated in lateral chains; acid groups are also needed, but only when the polyurethane polymer contains from 35 to 45% by weight of poly(ethyleneoxide).

WO 03/046038 is silent about the possibility of using the polyurethanes as water retention agents in paper coating compositions.

It is well known that the surface of printing paper sheets is commonly coated with a paper coating formulation to improve the printability and to make it smooth and glossy.

Paper coating compositions generally comprise fillers or pigments dispersed in water, polymeric binders, rheology modifiers, water retention agents and dispersing agents (see by way of example "Handbook for Pulp & Paper Technology", G.A. Smook, Angus Publications).

Dispersing agents are indispensable to reduce the viscosity in the presence of the high solid contents typical of paper coating compositions and to maintain a constant desired processing viscosity. Examples of conventional dispersing agents are complex phosphates, salts of polyphosphoric acid and salts of polycarboxylic acids.

Water retention agents prevent dewatering of the coating composition upon contact with the surface of the paper sheet. A typical water retention agent for paper coating composition is carboxymethyl cellulose.

Rheology modifiers are added to modulate the paper coating viscosity.

Binders are responsible for the cohesion of the final coating and for its adhesion to the paper sheet.

Some conventional paper coating additives are known to perform more than one function; by way of example, carboxymethyl cellulose acts both as rheology modifier and water retention agent, whereas polyvinyl alcohol acts both as water retention agent and optical brightness enhancer.

WO 01/96007, WO 2004/044022, WO 2004/041883 and WO 2007/069037 describe the use of polyacrylic anionic copolymers in the paper industry, for making or coating paper; the polyacrylic anionic copolymers contain at least one anionic ethylenically unsaturated monomer having monocarboxylic functionality and at least one non-ionic ethylenically unsaturated monomer having poly(C₂₋₄-alkylene oxide) functionalities. They are said to be useful as dispersing and/or grinding agents, as agents for improving the optical brightening activation, as water retention agents, as viscosity and gloss enhancers.

Unfortunately, when the known ionic substances are used in aqueous dispersions in accordance with the prior art, their effectiveness is dependent on the pH value of the dispersion.

It has now been found that specific comb polyurethanes are suitable as water retention agents for paper coating compositions; the paper coating compositions of the invention are stable over a wide viscosity range irrespective of their pH value and impart good printability and gloss to the coated paper.

### SUMMARY OF THE I NVENTI ON

In one embodiment, the invention is a water soluble comb polyurethane comprising a main chain (backbone) containing urethane and urea linkages with multiple trifunctional branching points from each of which a polyoxyalkylene side-chain emanates.

The comb polyurethane contains polyoxyalkylene side-chains having each molecular weight higher than 500, preferably from 2,000 to 20,000, and it has poly(ethylene oxide) content higher than 60% by weight and poly(propylene oxide) content from 5 to 30% by weight.

In another embodiment, the present invention is a paper coating composition comprising: a) from 30 to 80% by weight of an inorganic pigment; b) from 0.05 to 3.0 parts by weight each 100 parts by weight of pigment of the above described comb polyurethane; c) at least 15% by weight of water.

### DETAI LED DESCRI PTI ON

The polyoxyalkylene side-chains of the comb polyurethane are distributed along the backbone at intervals of less than 100, preferably of less than 50, covalent bonds.

In the present text, with the expression "polyoxyalkylene side-chain" we mean side chains comprising units that derive from the polymerization of ethylene oxide and propylene oxide.

The main chain containing urethane and urea linkages has uniformly spaced branch points, whose distribution can be predicted from the molar ratios and chemical nature of the reactants and does not depend from the reaction conditions or catalysts used. Therefore, the fine structure of the comb polyurethane can be advantageously reproduced and possibly modulated as desired.

The polyurethane backbone shall be per se insoluble in water and preferably it does not contain any internal or terminal polyoxyethylene chain.

The comb polyurethanes may be prepared by any method known in the art.

The polyoxyalkylene side-chains of the comb polyurethane are introduced by reacting in one of the preparation steps an organic isocyanate group with at least one compound comprising a polyoxyalkylene chain having molecular weight higher than 500, preferably from 2,000 to 20,000, more preferably from 4000 to 8000, poly(ethylene oxide) content higher than 65% by weight, poly(propylene oxide) content from 5 to 30% by weight and having one group which reacts with isocyanates.

Convenient examples of such compounds are (ethylene oxide)-(propylene oxide) copolymer monoalkyl ether, such as (ethylene oxide)-(propylene oxide) copolymer monomethyl ether and (ethylene oxide)-(propylene oxide) copolymer monobutyl ether.

Both random and block (ethylene oxide)-(propylene oxide) copolymers monoalkyl ether can be used.

When polymers are concerned, the term molecular weight used in this text means the number average molecular weight.

The methods of preparation of the comb polyurethanes of the invention comprise, as key intermediate, a bifunctional isocyanate containing polyoxyalkylene side-chains having each molecular weight higher than 500, preferably from 2,000 to 20,000, poly(ethylene oxide) content higher than 65% and poly(propylene oxide) content from 5 to 30% by weight which is reacted with one or more compounds having molecular weight from 34 to 300 and two groups which react with isocyanates, in order to chain extend the backbone, to increase the molecular weight of the bifunctional isocyanate and to obtain a comb polyurethane having high molecular weight.

According to one preferred method of preparation (Method A), the comb polyurethane is obtained by reacting in a first step about one mole of a compound having molecular weight from 92 to 1,200 and having three groups which react with isocyanates with about 3 moles of a diisocyanate (step a1); in a second step, the thus obtained trifunctional isocyanate is reacted with equimolar amounts of one or more compounds having molecular weight higher than 500, preferably from 2,000 to 20,000, poly(ethylene oxide) content higher than 65% by weight and poly(propylene oxide) content from 5 to 30% by weight and having one group which reacts with isocyanates (step a2); in a third step, the thus obtained bifunctional isocyanate is reacted with one or more compounds having molecular weight from 34 to 300 and having two groups which react with isocyanates (step a3).

According to another preferred method of preparation (Method B) the comb polyurethane is obtained by reacting in a first step a polyisocyanate with one or more compounds having molecular weight higher than 500, preferably from 2,000 to 20,000, poly(ethylene oxide) content higher than 65% and poly(propylene oxide) content from 5 to 30% by weight and having one group which reacts with isocyanates (step b1) in order to obtain, in the average, a bifunctional isocyanate; in a second step. The thus obtained isocyanate is reacted with one or more compounds having molecular weight from 34 to 300 and having two groups which react with isocyanates (step b2).

According to still another preferred method of preparation (Method C) the comb polyurethane is obtained by reacting in a first step a diisocyanate with equimolar amounts of one or more compounds having molecular weight higher than 500, preferably from 2,000 to 20,000, poly(ethylene oxide) content higher than 65% and poly(propylene oxide) content from 5 to 30% by weight and having one group which reacts with isocyanates (step c1); in a second step, the thus obtained monofunctional isocyanate is reacted with equimolar amounts of one or more compounds having molecular weight from 34 to 300 and having at least one -NH- group which reacts with isocyanates and at least two hydroxyl groups which react with isocyanates (step c2); in a third step, the thus obtained compound having two groups which react with isocyanates is reacted with diisocyanates in order to obtain an intermediate compound capped by two lateral isocyanate groups (step c3); in a fourth step, the thus obtained bifunctional isocyanate is reacted with one or more compounds having molecular weight from 34 to 300 and having two groups which react with isocyanates (step c4).

The compound of step a1 having molecular weight from 92 to 1,200 and having three groups which react with isocyanates is preferably a trifunctional alcohol. Examples of utilizable trifunctional alcohols are glycerin, polypropylene glycol triol, trimethylolpropane, trimethylolethane.

Any organic diisocyanate having molecular weight below 500 and average -NCO functionality from 2.0 to 2.1 may be used in step a1 and c1 as the diisocyanate.

Examples of useful diisocyanates are 1,6-hexamethylene diisocyanate (HDI), tetramethylene diisocyanate, 1-isocyanate-3-isocyanate-methyl-3,5,5-trimethyl-cyclohexane (or isophoronediisocyanate, IPDI), 4,4'-dicyclohexyl-methanediisocyanate, 2,4- toluenediisocyanate either alone or in admixture with 2,6-toluenediisocyanate (TDI), 4,4'-diphenyl-methanediisocyanate (MDI), meta-tetramethylxilylenediisocyanate (TMXDI), 1,5-naphthalene diisocyanate, and mixtures thereof; cycloaliphatic and aliphatic diisocyanate are preferred, the most preferred being IPDI.

The compounds having molecular weight from 34 to 300 and two groups which react with isocyanates used in steps a3, b2 and c4 are preferably diamines. Examples of utilizable diamines are hydrazine, ethylenediamine, piperazine, 1,5-pentanediamine, 1,6-dihexanediamine, isophoronediamine, diethylenetriamine.

Steps a3, b2 and c4 are preferably carried out by dispersing the bifunctional isocyanate in water and adding to the dispersion the diamine, possibly dissolved in water.

The compound having molecular weight from 34 to 300 of step c2 is preferably diethanolamine.

Any organic polyisocyanates with average -NCO functionality from 2,4 to 3,8 (trifunctional isocyanate), and having molecular weight below 800 may be used in step b1.

Examples of trifunctional isocyanates are the compounds obtained from trimerization, biurethization, urethanization or allophanation of difunctional isocyanates, such as those mentioned above, and mixtures thereof.

Useful trifunctional isocyanates are HDI biuret, HDI isocyanurate, IPDI trimers and the combination of the above trifunctional isocyanates with diisocyanates. The preferred trifunctional isocyanates are the isocyanurate and biuret obtained from hexamethylenediisocyanate, for example HDI isocyanurate in asymmetrical form, HDI biuret in low viscous form, and those obtained by the combinations of IPDI trimers and HDI trimers.

For purpose of the present invention, in order to obtain the desired high molecular weight comb polyurethane, it is preferred to minimize the quantity of diisocyanate that may be present together with the trifunctional isocyanates during the step b1, as it is well known to person skilled in the art.

For the purpose of the present invention, the ratio between the equivalents of isocyanate groups and the equivalent of groups which react with those isocyanate groups during the step c3 is between 1.1 and 2.3.

The water soluble comb polyurethanes are non-ionic compounds, devoid of acid groups, such as carboxylic and sulphonic acid groups.

Suitable solvents may be used in the preparation steps, but it is also possible to perform all the preparation steps with the neat reactants, without the use of water or organic solvents.

The preferred comb polyurethane has an overall poly(propylene oxide) content from 5 to 20% by weight and a total content of poly(ethylene oxide) and poly(propylene oxide) higher than 90% by weight, being able in such a way to impart to the paper coating composition a very good water retention together with good gloss and brightness.

The water soluble comb polyurethanes according to the invention are useful as water retention agents for paper coating compositions and provide coated paper with excellent printability, brightness and gloss; advantageously, they also act as deflocculant and viscosity stabilizers.

The paper coating compositions of the invention comprise: a) from 30 to 80% by weight, preferably from 60 to 80% by weight, of inorganic pigment; b) from 0.05 to 3.0 parts by weight each 100 parts by weight of pigment, of the above described comb polyurethane; c) at least 15% by weight of water, and have Brookfield® viscosity at 25°C and 100 rpm of less than 3,000 mPa∗s, preferably from 500 to 2,000 m Pa∗s.

Since the comb polyurethane does not act per se as pigment dispersant, the paper coating compositions according to the present invention also comprise from 0.01 to 3% by weight of a dispersing agent, usually an anionic uncrosslinked polyacrylate derivative, such as sodium polyacrylate, having molecular weight from 5,000 to 40,000. The compositions may also contain a specific rheologly modifier.

Typical useful rheology modifiers are carboxymethyl cellulose, hydroxypropyl guar, hydroxypropylmethyl cellulose, xanthan gum, ASA polymers (i.e. "Alkali Swellable Acrylic" polymers).

Dispersing agents, which are common ingredients of paper coating compositions, are not generally able to prevent the flocculation of the finest particles, especially when the paper coating composition is being applied on the paper sheet, i.e. under high shear stress conditions, and the particles flocculation is detrimental to the smoothness and the gloss of the resulting coated paper.

The comb polyurethanes of the present invention are also particularly effective as deflocculants, avoiding the formation of clusters of fine particles, which may tend to settle.

The inorganic pigments of the paper coating compositions, preferably having from 40 to 90% of the particles finer than 2 microns, are those normally employed in the coating of paper, and particularly kaolin, calcium carbonate, talc, titanium dioxide, barium sulfate, gypsum or mixtures thereof.

The paper coating compositions of the invention normally also comprise from 1 to 10% by weight of a binder, preferably a polymeric acrylic binder.

Among the polymeric acrylic binders preferred for the realisation of the invention we cite the polymers of acrylic or methacrylic acid esters, the copolymers of acrylic ester monomers and vinyl acetate, styrene, butadiene or mixtures thereof.

Other conventional additives, such as defoaming agents, biocides, optical brighteners, may be present in the paper coating compositions.

Another advantageous characteristic of the polyurethanes of the invention is the fact that they act as rheology and water retention buffers over different batches of industrial paper coating compositions having the same recipe; this means that, in the industrial coating process, the usual deviations from the theoretical amounts of paper coating ingredients do not affect the rheology and water retention characteristics.

### EXAMPLES

In the examples the following materials were used:
ALKOXY30: block ethylene oxide-propylene oxide copolymer monobutyl ether, (polyethylene glycol monobutyl ether initiated, poly(propylene oxide) content 30% by weight) molecular weight 7000 g/mol
ALKOXY20: random ethylene oxide-propylene oxide copolymer monobutyl ether, (poly(propylene oxide) content 20% by weight) molecular weight 7000 g/mol
ALKOXY10: block ethylene oxide-propylene oxide copolymer monobutyl ether, (polyethylene glycol monobutyl ether initiated, poly(propylene oxide) content 10% by weight) molecular weight 7000 g/mol
ETHOXY100: ethylene oxide homopolymer monobutyl ether, molecular weight 7000 g/mol
DIISOCYANATE1: isophoronediisocyanate, molecular weight 222.3 g/mol, Desmodur I from Bayer Material Science.
TRIISOCYANATE1: hexamethylene diisocyanate trimer, NCO content 24,0%, NCO functionality 3,1, Desmodur XP2410 from Bayer Material Science. Preparation of the comb polyurethanes

### EXAMPLE 1

A reaction vessel, equipped with internal thermometer, stirrer and cooler, was filled, under nitrogen atmosphere and at room temperature, with 229.9 g of ALKOXY30 and 0.1 g of 85% phosphoric acid. The mixture was heated under stirring to 85°C and 11.7 g of TRIISOCYANATE1 and 5.91 g of DIISOCYANATE1 were charged; after 20 minutes 0.3 g of dibutiltindilaurate (DBTL) were added. The reaction temperature was kept at 85°C until the titrimetric determination of the free -NCO groups still present gave a calculated value of 1.428 (determined by standard test method ASTM D2572).

The obtained product was dispersed by vigorous stirring into 740 g of water cooled at 18°C.

After 20 minutes 2.27 g of ethylenediamine dissolved in 9 g of water were dropped in.

The obtained product had solid content 25.57%, viscosity 196 mPa∗s (measured by Brookfield® viscometer at 20 rpm), poly(propylene oxide) content 28% by weight and pH 7.64.

### EXAMPLE II

The procedure of Example I was repeated to prepare a comb polyurethane with different poly(propylene oxide) content, by substituting ALKOXY30 with ALKOXY20.

The obtained product had solid content 25.21%, viscosity 93 mPa∗s (measured by Brookfield® viscometer at 20 rpm), poly(propylene oxide) content 18% by weight and pH 7.02.

### EXAMPLE I I I

The procedure of Example I was repeated to prepare a comb polyurethane with different poly(propylene oxide) content, by substituting ALKOXY30 with ALKOXY10.

The obtained product had solid content 25.84%, viscosity 244 m Pa∗s (measured by Brookfield® viscometer at 20 rpm), poly(propylene oxide) content 9% by weight and pH 7.15.

### EXAMPLE IV (comparative)

The procedure of Example I was repeated to prepare a comb polyurethane devoid of propylene oxide units, by substituting ALKOXY30 with ETHOXY100. The obtained product had solid content 25.30%, viscosity 364 m Pa∗s (measured by Brookfield® viscometer at 20 rpm), poly(propylene oxide) content 0% by weight and pH 7.09.

### Application Examples

Paper coating compositions based on 100% calcium carbonate (GCC 90% <2 micron) were prepared using the comb polyurethanes from Examples I-IV and a water retention agent of the prior art (Viscolam GP 37 from Lamberti SpA, IT).

The compositions of the paper coating compositions are reported in Table 1; the amounts of the ingredients are parts by weights.

The paper coating compositions were characterized by performing the following measurements:
- pH
- Brookfield@ viscosity, 100 rpm
- Dry matter
- Water retention -Tappi Method T710

The data obtained are also reported in Table 1.

**Table 1**

| PAPER COATING COMPOSITIONS: | 1 | 2 | 3 | 4³⁾ | 5³⁾ |
|---|---|---|---|---|---|
| GCC 90 | 100 | 100 | 100 | 100 | 100 |
| DOW LATEX 935¹⁾ | 10 | 10 | 10 | 10 | 10 |
| TINOPAL ABPZ²⁾ | 1 | 1 | 1 | 1 | 1 |
| Ex. 1 | 0.5 | / | / | / | / |
| Ex. 2 | / | 0.5 | / | / | / |
| Ex. 3 | / | / | 0.5 | | / |
| Ex. 4 | / | / | / | 0.5 | / |
| VISCOLAM GP37 | / | / | / | / | 0.6 |
| Water | q.s. | q.s. | q.s. | q.s. | q.s. |

| CHARACTERISTICS OF THE PAPER COATING COMPOSITIONS | | | | | |
|---|---|---|---|---|---|
| Dry matter (%) | 68.99 | 72.11 | 72.15 | 72.11 | 69.83 |
| pH | 9.05 | 9.05 | 9.05 | 9.06 | 9.05 |
| Viscosity (mPa∗s) | 2680 | 1264 | 1540 | 1450 | 1400 |
| **Water retention (g/m²)** | **190** | **165** | **132** | **129** | **98** |

| | | | | | |
|---|---|---|---|---|---|
| 1) Binder, styrene butadiene latex (Dow Chemical Co. US) 2) Optical brightener (CI BA, CH) 3) Comparative | | | | | |

The paper coating compositions were applied (13 g/m²) on offset sheets (80 g/m²); the sheets were conditioned for 24h at 21 °C and 50% r.h. and calendared (cylinders temperature 55°C, pressure 67.5 Kg/cm; 4 nips). Brightness and gloss values were measured and are reported in Table 2.

**Table 2**

| PAPER COATING COMPOSITION : | °Brightness¹⁾ | Gloss @ 75°²⁾ |
|---|---|---|
| 1 | 100.36 | 56.6 |
| 2 | 100.44 | 66.7 |
| 3 | 100.55 | 66.3 |
| 4³⁾ | 100.76 | 67.9 |
| 5³⁾ | 100.78 | 65.8 |

| | | |
|---|---|---|
| 1) Brightness, Tappi Method T452 2) Specular Gloss at 75°, Tappi Method T480 3) comparative | | |

## Claims

1. Water soluble comb non-ionic polyurethane comprising a main chain containing urethane and urea linkages with branching points from each of which a linear polyoxyalkylene side-chains having each molecular weight higher than 500 emanates, the comb polyurethane being **characterized by** having poly(ethylene oxide) content higher than 60% by weight and poly(propylene oxide) content from 5 to 30% by weight.

2. Water soluble comb polyurethane according to claim 1 whose polyoxyalkylene side-chains have molecular weight from 2,000 to 20,000.

3. Water soluble comb polyurethane according to claim 2 whose polyoxyalkylene side-chains have molecular weight from 4,000 to 8,000.

4. Water soluble comb polyurethane according to claim 1 having poly(propylene oxide) content from 5 to 20% by weight and a total poly(ethylene oxide) and poly(propylene oxide) content higher than 90% by weight.

5. Paper coating compositions comprising a) from 30 to 80% by weight of an inorganic pigment chosen among kaolins, calcium carbonate, talc, titanium dioxide, barium sulfate, gypsum and mixtures thereof; b) from 0.05 to 3.0 parts by weight each 100 parts by weight of pigment of at least one comb polyurethane according to claims from 1 to 4; c) at least 15% by weight of water, and having Brookfield® viscosity at 25°C and 100 rpm of less than 3,000 m Pa∗s.

6. Paper coating compositions according to claim 5 comprising from 60 to 80% by weight of inorganic pigment.

7. Paper coating compositions according to claim 6 further comprising from 0.01 to 3% by weight of a dispersing agent and from 1 to 10% by weight of a binder

8. Paper coating compositions according to claim 7. wherein the inorganic pigment has from 40 to 90% by weight of the particles finer than 2 m icrons.
